# EUROPEAN PATENT SPECIFICATION

(11) **EP 1 154 343 B1**
(45) Date of publication and mention of the grant of the patent: **18.01.2006**
(21) Application number: 01201564.0
(22) Date of filing: 01.05.2001
(51) Int. Cl.: G05D 23/02

(54) **Valve, particularly thermostatic valve for heating systems**
Ventil, insbesondere Thermostatventil für Heizungsanlagen
Robinet, en particulier un robinet thermostatique pour installations de chauffage

(30) Priority: 10.05.2000 DE 10022729
(43) Date of publication of application: 14.11.2001
(73) Proprietor: Danfoss A/S, 6430 Nordborg (DK)
(72) Inventor: Hölck, Poul, 8330 Beder (DK); Garm, Fester, 8600 Silkeborg (DK); Wiwe, Jorgen Seindal, 8355 Solberg (DK)

(56) References cited:
- DE-A- 2 546 213
- DE-A- 4 344 773
- DE-U- 29 905 078
- US-A- 3 300 136
- US-A- 4 171 768
- US-A- 4 611 629

## Description

The invention concerns a valve, particularly a thermostatic valve for heating systems, with a housing, a value seat, a closing piece that is operated by means of a pin penetrating a sealing arrangement, and with a connecting arrangement having a first shape suited for fixing an operating element.

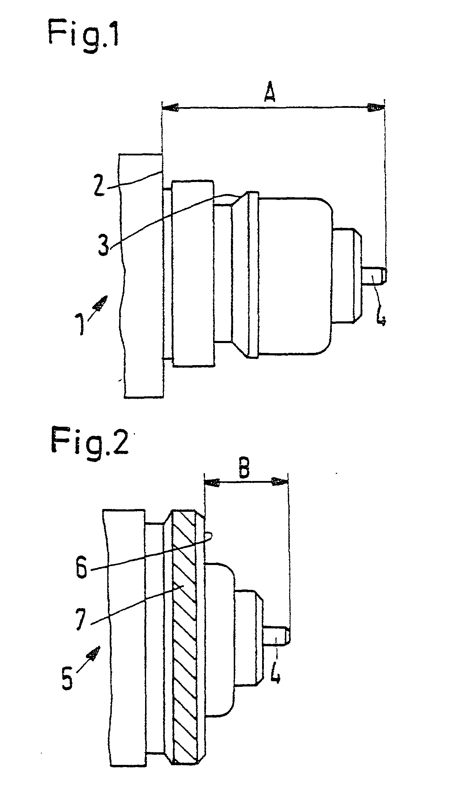

In order that an operating element can be mounted on a valve, the valve housing must be provided with a connecting arrangement, which corresponds to the type of the operating element. Most valves available on the market have connecting arrangements as shown in the Figs. 1 and 2. On the connecting arrangement 1 having a first shape, a contact surface 2 is provided, against which the socket of the operating element is pressed by redirecting a radial force on a conically shaped tightening surface 3 in the axial direction. The distance A between the contact surface 2 and the free end of the pin 4 that operates the closing piece, is approximately 30 mm. One example of this is shown in DE 32 36 372 C2. On the connecting arrangement 5 having a second shape, the contact surface 6 is provided on the front side of a tightening surface 7 made as a thread. A union nut with an inner flange screwed onto this tightening surface will press the socket of the operating element against the contact surface 6. The tightening surface 7 has an M30x1 thread. The distance between the contact surface 6 and the free end of the valve pin 4 amounts to approximately 10 mm. An example of this is shown in DE 43 44 773 A1. Other connecting arrangements differ from the connecting arrangement 5 in that the distance B is somewhat larger, for example 20 mm.

Further, it is known (DE 94 11 056 U1) to make one single valve suited for the connection of two or more types of operating elements, by means of an adaptor, that is, an additional component, inserted between the valve and the operating element. In connection with repair work, the heating installer then only has to bring along a few spare parts. Also, he can combine valves and operating elements from different manufacturers. However, it has turned out that often the additional components or adaptors required for specific applications are not available when required. They may either have been lost or used.

The invention is based on the task of providing a valve as described in the introduction, having all means required for the optional fitting of at least two different types of operating elements.

According to the invention, this task is solved in that the connecting arrangement has at least one connecting element that is adjustable in the direction of the pin axis, thus assuming on adjustment of this at least one connecting element a second shape suited for fixing a second type of operating element, that the sealing arrangement divides the interior of the housing into a wet zone and a dry zone and that the dry zone serves the purpose of adopting at least a share of the at least one connecting element.

The introduction of axially displaceable parts makes it possible to create at least two different shapes, suited optionally for the fitting of a first or a second type of operating element. This idea has already been described in the German patent application 199 55 259.

According to the invention, the division into a wet zone and a dry zone as well as the placing of at least a share of the connecting elements in the dry zone are additional features. The valve parts placed in the dry zone require no particularly high production tolerances, as sealing problems do not occur in the dry zone. Therefore, the valve parts can be produced by means of an inexpensive moulding technique. Additionally, the number of sealings can be reduced to a minimum, as the connecting elements placed in the dry zone require no sealing towards the outside. The closer the sealing arrangement of the separating wall is to the valve seat, the more room is available for arranging the connecting elements in the dry zone of the housing.

It is advantageous that both shapes have a contact surface, the contact surface of the first shape having a larger distance from the free end of an inlet member connected with the pin than the contact surface of the second shape. In many cases, an axial displacement of this kind will be sufficient to provide two different shapes of a connecting arrangement.

It is recommendable that each of the two shapes has a tightening area allocated to the contact surface, being in connection with the first shape a cone surface with a small outer diameter and in connection with the second shape an external thread with a large diameter. With these two kinds, the major part of the operating elements available on the market can be fitted on the valve.

It is advantageous that an inner connecting element has an inlet member and an intermediary member connected between the pin and the inlet member and that the inlet member can be connected with the intermediary member in at least two different axial positions. Therefore, the inlet member and the intermediary member can be displaced telescopically in relation to each other to perform an adaptation to the desired shape.

Further, it is advantageous that a central connecting element has a sleeve shape, is provided on the outside with a tightening area, is guided in the housing and is retainable in at least two positions. In this way, a tightening area can be brought to its correct position. When not in use, it can be covered by other components.

It is recommendable that an outer connecting element is made as a threaded ring, which is guided on the outside of the housing and can be brought into at least two positions, and having on the front side a contact surface active in both shapes and on the circumference a tightening area in the shape of a thread. A threaded ring of this kind gives a very simple construction.

In a further embodiment, it is ensured that the dry zone has a cylinder chamber formed between the sealing arrangement and the housing, parts of the connecting arrangement being placed here. The fact that the cylinder chamber adopts components, for example the central connecting element or a spring, provides for a good utilisation of the available room.

Further, a spring arrangement is recommended that retains the connecting elements in a shape enabling the fitting of a first type of operating elements. For the user, it is then obvious that the valve is always delivered in the first shape, meaning that a modification is required to obtain the second shape.

It is expedient that the inlet member and the intermediary member are held together by means of a coupling spring. This coupling spring can be active in several axially different positions of the inlet member in relation to the intermediary member.

Further, it is advantageous that an auxiliary spring retains the outer connecting element in a position corresponding to the second shape and displaces it to a position corresponding to the first shape when an axial load occurs. With this design, the outer connecting element automatically adapts to the type of the operating element used.

It is also advantageous that the sealing arrangement serves as lift limitation for the closing piece, is screwed into a thread in the housing and can be turned from the outside. This provides for a presetting of the valve through a limitation of the lift height.

In the following, the invention is described in detail on the basis of preferred embodiments as shown in the drawings:
- Fig. 3: a longitudinal section through a valve according to the invention with a first shape of a connecting arrangement,
- Fig. 4: the valve of Fig. 3 with a second shape of the connecting arrangement,
- Fig. 5: individual parts of Figs. 3 and 4,
- Fig. 6: a second embodiment of a valve according to the invention with a first shape of the connecting arrangement,
- Fig. 7: the valve of Fig. 6 with a second shape of the connecting arrangement,
- Fig. 8: individual parts of the valve of Figs. 6 and 7

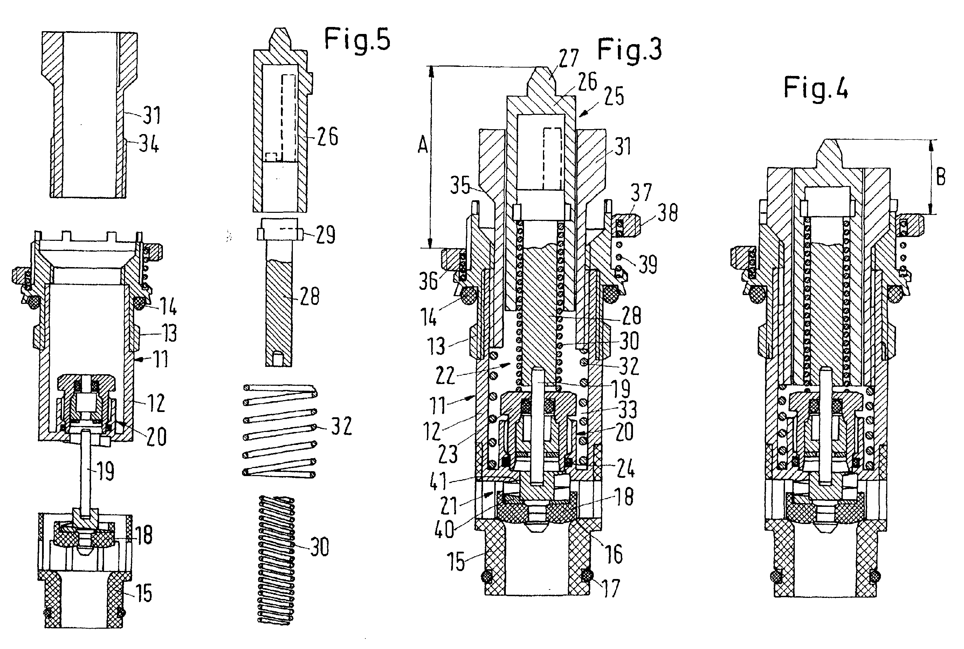

The valve in Figs. 3 to 5 is designed for building in. Its housing 11 has an insert 12 that can be screwed into a union on the front side of a radiator by means of a thread 13, a sealing 14 being pressed against the front face. To the housing 1 belongs also a bottom part 15 carrying a valve seat 16 and projecting into an inlet bore of the radiator by way of a sealing 17.

The valve seat 16 cooperates with a closing piece 18 that is operated by means of a pin 19.

A separating wall 20 is available, having a pressure arrangement 23 that divides the interior of the housing 11 into a wet zone 21 and a dry zone 22. The pin 19 is led from the wet zone 21 into the dry zone 22 through the sealing arrangement 23, also called stuffing box. This sealing arrangement 23 is screwed into the housing 11, and for the complete sealing only one additional fixed sealing 24 is required.

An inner connecting element 25 is formed by means of an inlet member 26 with a projection 27 and an intermediary member 28. The inlet member 26 and the intermediary member 28 can be displaced telescopically in relation to each other, and in two positions corresponding to the Figs. 3 and 4, they can be connected with each other utilising stops 29. A spring 30 presses the connecting element 25 outwards. As the intermediary member 28 and the pin 19 are fixedly connected with each other, the spring 30 at the same time serves as opening spring for the closing piece.

By means of a spring 32, which is arranged in a cylinder chamber 33 between the sealing arrangement 23 and the housing 11, a sleeve-shaped central connecting element 31 is pressed outwards to a position predetermined by the stop 34. This central connecting element 31 has a tightening area 35 in the shape of a cone face. This cone face is active in the connection shape in Fig. 3, and is covered in accordance with Fig. 4, when the central connecting element 31 is pushed inwards.

An outer connecting element 36 is formed by a threaded ring secured against turning, whose front face forms a stop 37 and whose external thread forms a tightening area 38. An auxiliary spring 39 presses the outer connecting element 36 outwards (to the right in Figs. 3 and 4). When, however, a thermostatic top part presses against the stop 37, the outer connecting element 36 can be displaced to position shown to the left in the Figs. 3 and 4.

The valve is delivered in the position shown in Fig. 3, the connecting element 36 having the position shown in the right side. When now an operating element of a first type, cooperating with the tightening area 35, is fitted axially, the outer connecting element 36 is taken to the position shown to the left, so that the distance A appears between the stop 37 and the peak of the projection 27. When, however, an operating element of a second shape is fitted, which is provided with a union nut with an M30x1.5 thread, the inlet member 26 and the central connecting element 31 are pushed inwards, so that the connecting arrangement shape shown in Fig. 4 appears, in which the distance B between the stop 37 and the peak of the projection 27 is smaller than in the case described above.

It appears that all parts of the connecting arrangement are placed in the dry zone 22 or further out, so that a sealing between these connecting elements is not required.

For the purpose of presetting, the valve also has an adjustable lift limitation. In this connection, the central connecting element 31 is unrotatably connected with a carrier 40 for the closing piece 18 via the inner connecting element 25 and the pin 19, the carrier bearing on an inclined face 41 of the housing 11. Thus, the opening lift of the valve can be set by turning the central connecting element 31.

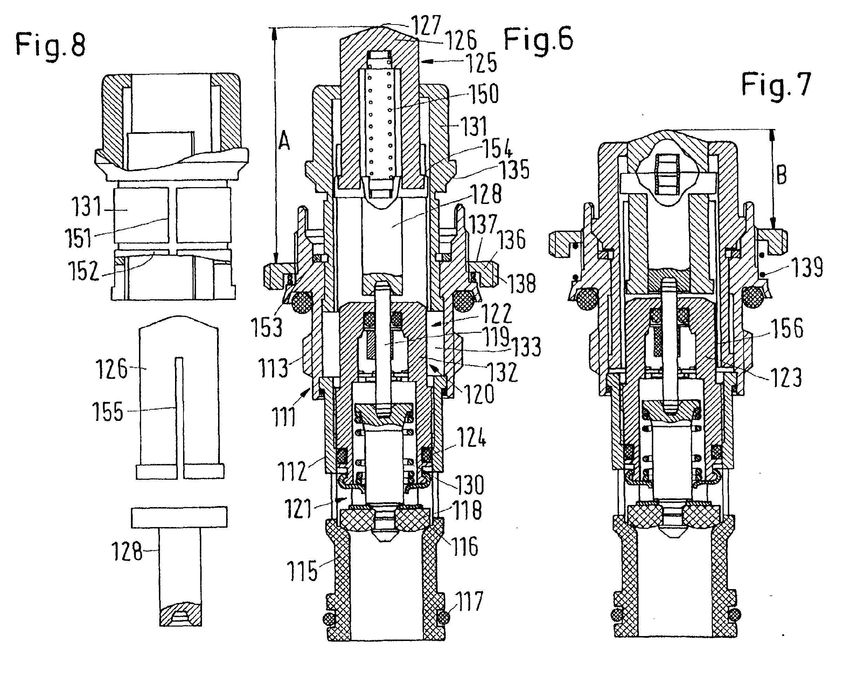

In the embodiment according to the Figs. 6 to 8, the reference numbers for corresponding parts have been increased by 100. The difference is that the opening spring 130 of the valve is arranged in the wet zone 121, meaning that the sealing arrangement 123 has a larger distance from the valve seat 116. Further, the cylinder chamber 133 is provided for the adoption of a part of the central connecting element 131. A tension spring 150 pulls the inlet member 126 and the intermediary member 128 towards each other. The central connecting element 131 has axis parallel grooves 151 and circumferential grooves 152, into which guiding elements 153 arranged on the housing 111 engage. On the inside, stops 154 are provided that cooperate with the inlet member 126. This inlet member is rotatably connected with the central connecting element 131 via slots 155.

The valve is delivered in the shape shown in Fig. 6, the outer connecting element 136 being in the elevated position. When, however, the shape suited for the second type of operating element is required, the central connecting element 131 merely has to be turned, until the guiding element 153 engages in an axis parallel groove 151. Then, under the influence of the tension spring 150, both the inlet member 126 and the central connecting element 131 assume the second shape shown in Fig. 7.

Also with this embodiment a lift limitation is provided for presetting. For this purpose, the central connecting element 131 is connected with the sealing arrangement 123 via a polygon coupling 156. A turning of the connecting element 131 will turn the sealing arrangement 123 in its thread and displace it axially.

Deviations from the embodiments shown are possible in many ways, without destroying the basic idea of the invention. For example, a pressure spring can be used in stead of the tension spring 150, if only it has the same effect as the tension spring. In stead of the shown valves for building in, also valves with inlet and outlet connectors can be designed in accordance with the invention.

## Claims

1. Valve, particularly a thermostatic valve for heating systems, with a housing (11,11), a valve seat (16,116) a closing piece (18,118) that is operated by means of a pin (19,119) penetrating a sealing arrangement (23,123), and with a connecting arrangement having a first shape suited for fixing an operating element, **characterised in that** the connecting arrangement has at least one axially displaceable connecting element (25, 31, 36; 125, 131, 136) that is displaceable in the direction of the pin axis, so that it is capable after displacement of this at least one connecting element to assume a second shape suited for fixing a second type of operating element, that the sealing arrangement (23; 123) divides the interior of the housing (11; 111) into a wet zone (21; 121) and a dry zone (22; 122) and that the dry zone (22; 122) serves the purpose of adopting at least a share of the at least one connecting element (25, 31, 36; 125, 131, 136) .

2. Valve according to claim 1, **characterised in that** both shapes have a contact surface (37; 137), the contact surface of the first shape having a larger distance from the free end of an inlet member (26; 126) connected with the pin than the contact surface of the second shape.

3. Valve according to claim 1 or 2, **characterised in that** each of the two shapes has a tightening area (35, 37; 135, 137) allocated to the contact surface (37; 137), being in connection with the first shape a cone face with a small outer diameter and in connection with the second shape an external thread with a large diameter.

4. Valve according to one of the claims 1 to 3, **characterised in that** an inner connecting element (25; 125) has an inlet member (26; 126) and an intermediary member (28; 128) connected between the pin and the inlet member and that the inlet member (26; 12.6) can be connected with the intermediary member (28; 128) in at least two different axial positions.

5. Valve according to one of the claims 1 to 4, **characterised in that** a central connecting element (31; 131) has a sleeve shape, is provided on the outside with a tightening area (35; 135), is guided in the housing (11; 111) and is retainable in at least two positions.

6. Valve according to one of the claims 1 to 5, **characterised in that** an outer connecting element (36; 136) is made as a threaded ring, which is guided on the outside of the housing (11; 111) and can be brought into at least two positions, and having on the front side a contact surface (37; 137) active in both shapes and on the circumference a tightening area (38; 138) in the shape of a thread.

7. Valve according to one of the claims 1 to 6, **characterised in that** the dry zone (22; 122) has a cylinder chamber (33; 133) formed between the sealing arrangement (23; 123) and the housing (11, 111), parts of the connecting arrangement being placed here.

8. Valve according to one of the claims 1 to 7, **characterised by** a spring arrangement that retains the connecting elements (25, 31, 36; 125, 131, 136) in a shape enabling the fitting of a first type of operating elements.

9. Valve according to one of the claims 4 to 8, **characterised in that** the inlet member (26; 126) and the intermediary member (28; 128) are held together by means of a coupling spring (30; 130).

10. Valve according to one of the claims 4 to 9, **characterised in that** an auxiliary spring (39; 139) retains the outer connecting element (36; 136) in a position corresponding to the second shape and displaces it to a position corresponding to the first shape when an axial load occurs.

11. Valve according to one of the claims 1 to 10, **characterised in that** the sealing arrangement (23; 123) serves as lift limitation for the closing piece (18; 118), is screwed into a thread in the housing (11; 111) and can be turned from the outside.

## Patentansprüche

1. Ventil, insbesondere Thermostatventil für Heizungsanlagen, mit einem Gehäuse (11, 111), einem Ventilsitz (16, 116), einem Verschlußstück (18, 118), das mittels eines durch eine Dichtvorrichtung (23, 223) hindurch geführten Stiftes (19, 119) zu betätigen ist, und mit einer Anschlußvorrichtung, die eine zum Befestigen eines Betätigungsaufsatzes geeignete erste Form hat, **dadurch gekennzeichnet, daß** die Anschlußvorrichtung mindestens ein relativ zum Gehäuse in Richtung der Stiftachse axial verstellbares Anschlußelement (25, 31, 36; 125, 131, 136) aufweist und durch Verstellung dieses mindestens einen Anschlußelements eine zum Befestigen eines zweiten Typs eines Betätigungsaufsatzes geeignete zweite Form annimmt, daß der Innenraum des Gehäuses (11; 111) durch die Dichtvorrichtung (23; 123) in eine Naßzone (21; 121) und eine Trockenzone (22; 122) unterteilt ist und daß die Trockenzone (22; 122) zur Aufnahme wenigstens eines Teils des mindestens einen Anschlußelements (25, 31, 36; 125, 131, 136) dient.

2. Ventil nach Anspruch 1, **dadurch gekennzeichnet, daß** beide Formen eine Anlagefläche (37; 137) aufweisen, von denen die Anlagefläche der ersten Form einen größeren Abstand vom freien Ende eines mit dem Stift gekuppelten Eingangsgliedes (26; 126) hat als die Anlagefläche der zweiten Form.

3. Ventil nach Anspruch 1 oder 2, **dadurch gekennzeichnet, daß** beide Formen je einen der Anlagefläche (37; 137) zugeordneten Spannbereich (35, 37; 135, 137) aufweisen, der bei der ersten Form durch eine Konusfläche kleineren Außendurchmessers und bei der zweiten Form durch ein Außengewinde größeren Durchmessers gebildet ist.

4. Ventil nach einem der Ansprüche 1 bis 3, **dadurch gekennzeichnet, daß** ein inneres Anschlußelement (25, 125) ein Eingangsglied (26; 126) und ein zwischen Stift und Eingangsglied geschaltetes Zwischenglied (28; 128) aufweist und daß das Eingangsglied (26; 126) in mindestens zwei unterschiedlichen Axialstellungen mit dem Zwischenglied (28; 128) kuppelbar ist.

5. Ventil nach einem der Ansprüche 1 bis 4, **dadurch gekennzeichnet, daß** ein mittleres Anschlußelement (31; 131) hülsenartig ausgebildet, an der Außenseite mit einem Spannbereich (35; 135) versehen, im Gehäuse (11; 111) geführt und in mindestens zwei Stellungen festhaltbar ist.

6. Ventil nach einem der Ansprüche 1 bis 5, **dadurch gekennzeichnet, daß** ein äußeres Anschlußelement (36; 136) durch einen Gewindering gebildet ist, der an der Außenseite des Gehäuses (11; 111) geführt und in mindestens zwei Stellungen bringbar ist, sowie stirnseitig eine in beiden Formen wirksame Anlagefläche (37; 137) und am Umfang einen als Gewinde ausgebildeten Spannbereich (37, 137) trägt.

7. Ventil nach einem der Ansprüche 1 bis 6, **dadurch gekennzeichnet, daß** die Trockenzone (22; 122) einen zwischen Dichtvorrichtung (23; 123) und Gehäuse (11; 111) gebildeten Zylinderraum (33, 133) aufweist, in dem Teile der Anschlußvorrichtung plaziert sind.

8. Ventil nach einem der Ansprüche 1 bis 7, **gekennzeichnet durch** eine Federanordnung, die die Anschlußelemente (25, 31, 36; 125, 131, 136) in einer das Aufsetzen eines ersten Typs eines Betätigungsaufsatzes ermöglichende Form hält.

9. Ventil nach einem der Ansprüche 4 bis 8, **dadurch gekennzeichnet, daß** Eingangsglied (26; 126) und Zwischenglied (27; 128) durch eine Kupplungsfeder (30; 130) aneinander gehalten sind.

10. Ventil nach einem der Ansprüche 4 bis 9, **dadurch gekennzeichnet, daß** das äußere Anschlußelement (36; 136) durch eine Hilfsfeder (39; 139) in einer der zweiten Form entsprechenden Lage gehalten und bei axialer Belastung in eine der ersten Form entsprechende Lage verschoben wird.

11. Ventil nach einem der Ansprüche 1 bis 10, **dadurch gekennzeichnet, daß** die Dichtvorrichtung (23; 123) als Hubbegrenzung für das Verschlußstück (18, 118) dient, in ein Gewinde des Gehäuses (11; 111) geschraubt ist und von außen drehbar ist.

## Revendications

1. Clapet, notamment un clapet thermostatique pour systèmes de chauffage avec un logement (11, 111), un siège de clapet (16, 116), une pièce de fermeture (18, 118) qui est actionnée au moyen d'une broche (19, 119) pénétrant dans un agencement d'étanchéité (23, 123) et avec un agencement de liaison ayant une première forme appropriée pour fixer un élément d'actionnement, **caractérisé en ce que** l'agencement de liaison comprend au moins un élément de liaison axialement déplaçable (25, 31, 36 ; 125, 131, 136) qui est déplaçable dans la direction de l'axe de broche, de sorte qu'il est capable, après le déplacement de cet au moins élément de liaison, de prendre une deuxième forme appropriée pour fixer un deuxième type d'élément d'actionnement, **en ce que** l'agencement d'étanchéité (23 ; 123) divise l'intérieur du logement (11 ; 111) en une zone humide (21 ; 121) et une zone sèche (22 ; 122) et **en ce que** la zone sèche (22, 122) sert au but d'adopter au moins un partage d'au moins un élément de liaison (25, 31, 36 ; 125, 131, 136).

2. Clapet selon la revendication 1, **caractérisé en ce que** les deux formes ont une surface de contact (37 ; 137), la surface de contact de la première forme ayant une distance plus grande à partir de l'extrémité libre de l'élément d'entrée (26 ; 126) relié à la broche que la surface de contact de la deuxième forme.

3. Clapet selon la revendication 1 ou 2, **caractérisé en ce que** chacune des deux formes présente une surface de serrage (35, 37 ; 135, 137) allouée à la surface de contact (37 ; 137) qui est en liaison avec la première forme d'une face conique avec un petit diamètre extérieur et en liaison avec la deuxième forme d'un filetage externe avec un grand diamètre.

4. Clapet selon l'une des revendications 1 à 3, **caractérisé en ce qu'**un élément de liaison intérieur (25 ; 125) présente un élément d'entrée (26 ; 126) et un élément intermédiaire (28 ; 128) relié entre la broche et l'élément d'entrée et **en ce que** l'élément d'entrée (26, 126) peut être relié à l'élément intermédiaire (28 ; 128) dans au moins deux positions axiales différentes.

5. Clapet selon l'une des revendications 1 à 4, **caractérisé en ce qu'**un élément de liaison central (31 ; 131) présente une forme de manchon, est prévu sur le côté extérieur avec une surface de serrage (35 ; 135), est guidé dans le logement (11 ; 111) et est apte à être retenu dans au moins deux positions.

6. Clapet selon l'une des revendications 1 à 5, **caractérisé en ce qu'**un élément de liaison extérieur (36, 136) est réalisé comme une bague filetée, qui est guidée sur l'extérieur du logement (11 ; 111) et peut être amenée dans au moins deux positions et ayant sur le côté avant une surface de contact (37 ; 137) active selon deux formes et sur la circonférence une surface de serrage (38 ; 138) sous la forme d'un filet.

7. Clapet selon l'une des revendications 1 à 6, **caractérisé en ce que** la zone sèche (22 ; 122) présente une chambre de cylindre (33 ; 133) formée entre l'agencement d'étanchéité (23 ; 123) et le logement (11, 111), des parties de l'agencement de liaison étant placées ici.

8. Clapet selon l'une des revendications 1 à 7, **caractérisé par** un agencement à ressort qui retient les éléments de liaison (25, 31, 36 ; 125, 131, 136) selon une forme permettant l'adaptation d'un premier type d'éléments d'actionnement.

9. Clapet selon l'une des revendications 4 à 8, **caractérisé en ce que** l'élément d'entrée (26 ; 126) et l'élément intermédiaire (28 ; 128) sont maintenus conjointement au moyen d'un ressort de couplage (30 ; 130).

10. Clapet selon l'une des revendications 4 à 9, **caractérisé en ce qu'**un ressort auxiliaire (39 ; 139) retient l'élément de liaison extérieur (36 ; 136) dans une position correspondant à la deuxième forme et le déplace vers une position correspondant à la première forme lorsqu'une charge axiale apparaît.

11. Clapet selon l'une des revendications 1 à 10, **caractérisé en ce que** l'agencement d'étanchéité (23 ; 123) sert comme limitation d'élévation pour la pièce de fermeture (18 ; 118), est vissé dans un filet dans le logement (11 ; 111) et peut être tourné à partir de l'extérieur.
